# EUROPEAN PATENT APPLICATION

(11) **EP 1 686 728 A1**
(43) Date of publication of application: **02.08.2006**
(21) Application number: 05257915.8
(22) Date of filing: 20.12.2005
(51) Int. Cl.: H04L 12/28, H04L 29/06

(54) **Method and apparatus for automatically interfacing between devices used to reproduce content and recording medium storing computer program for executing the method**

(30) Priority: 27.01.2005 KR 2005007624
(71) Applicant: Samsung Electronics Co., Ltd., Suwon-si, Gyeonggi-Do (KR)
(72) Inventor: Kim, Eun-hyung, Bundang-gu, Seongnam-si, Gyeonggi-do (KR); Song, Sang-gon, Yeongtong-gu, Suwon-si, Gyeonggi-do (KR)
(74) Representative: Clark, David James

(57) **Abstract**

A method and an apparatus are provided for automatically interfacing between devices that reproduce content in a network with reference to reproduction property information of a content file. A computer-readable recording medium storing a computer program for executing the method is also provided. One of a plurality of content reproduces (131, 631) is selected with reference to at least one reproduction property information of a content file selected and specification information of the content reproducers (131,631). Thereafter, the selected content file is transmitted from a content provider (131, 631) to the selected content reproducer (131, 631), and then the selected content reproducer (131, 631) reproduces the selected content file. Therefore, knowledge of reproduction property information by the user is not required, and the number of processes that are needed in reproducing the selected content file is reduced.

## Description

The present invention relates to methods and apparatus for automatically interfacing between devices which reproduce content, and further relates to recording media storing a computer program for executing methods of automatically interfacing between devices.

As the functionality of wired or wireless electronic devices used in homes or businesses increases, an increasing number of network techniques for interfacing between such electronic devices have been developed. Universal Plug and Play (UPnP), which is one of the network techniques, is an architecture for connecting electronic devices to one another as a peer-to-peer network and has been developed based on Internet standards, such as Transmission Control Protocol/Internet Protocol (TCP/IP), HyperText Transfer Protocol (HTTP), and eXtensible Markup Language (XML).

Devices connected to a UPnP-based network are able to automatically recognize one another. For example, if a user adds a device to the UPnP based network, the device is given a TCP/IP address using the Internet and a web protocol and the device informs other devices which were previously connccted to the network of its existence in the UPnP-based network using an HTTP-based discovery protocol. If the UPnP-based network is a home network, the devices connected to the UPnP-based network may be appliances, such as a refrigerator, a TV, a washing machine, a computer, a stereo, a digital versatile disc (DVD) player, and a petsonal digital assistant (PDA).

However, in order for a user to reproduce particular content in the UPnP-based network, the user must select an appropriate media renderer for reproducing the particular content and then manually set operating conditions for the selected media renderer.

For example, in the case of reproducing an high definition (HD) movie, a user is required to select a device which is capable of reproducing HD movies from among a plurality of devices connected to a network as an optimum media renderer for the HD movie and the user is then required to manually set operating conditions for the selected device so that the selected device can reproduce the HD movie in an optimum environment. The operating conditions may include input mode information, screen ratio information, sound mode information, and volume level information, Accordingly, the more complicated the reproduction properties of content to be reproduced, the more processes the user is required to perform to reproduce the content. In addition, in order to select one of the content reproduction devices connected to the network as an optimum media renderer for the content to be reproduced and establish an optimum reproduction environment for the selected device, the user must have knowledge of the reproduction properties of the content to be reproduced.

The present invention provides a method and an apparatus for automatically interfacing between devices which are used to reproduce content in a network based on the reproduction properties of content to be reproduced and further provides a recording medium storing a computer program for executing the method.

The present invention also provides a method and an apparatus for automatically interfacing between devices which are used to reproduce content, which can select one of a plurality of content reproduction devices connected to a. network as an optimum content reproduction device based on the reproduction properties of the content to be reproduced and can automatically establish an optimum reproduction environment for the selected content reproduction device, and further provides a recording medium storing a computer program for executing the method.

The present invention also provides a method and an apparatus for automatically interfacing between a media server and a media renderer based on the reproduction properties of content to be reproduced in a UPnP-based network, and further provides a recording medium storing a computer program for executing the method.

In a first aspect of the present invention, there is provided a method of automatically interfacing between, devices that reproduce content in a network which includes at least one content providing device and at least one content reproducing device, method comprising: selecting a content reproducing device based on metadata of a content file which is selected and specification information of the content reproducing device; transmitting the content file from a content providing device that provides the selected content file which is selected to the content reproducing device which is selected; and reproducing the selected content file by the content reproducing device which is selected.

In a second aspect of the present invention, there is provided a method of automatically interfacing between devices that reproduce content in a network which includes at least one content providing device, at least one content reproducing device, and a control module that manages and controls the at least one content providing device and the at least one content reproducing device, the method comprising: providing identification information of a plurality of content files which are managed by a content providing device to the control module if a request for content is issued; providing at least one reproduction property of a content file which is selected from among the plurality of content files to the control module if identification information of the selected content file is received from the control module; and transmitting the selected content file to a content reproducing device which is selected from a plurality of content reproducing devices if identification information of the selected content reproducing device is received from the control module.

In a third aspect of the present invention, there is provided a method of automatically interfacing between devices that reproduce content in a network which includes at least one content providing device, at least one content reproducing device, a control module that manages and controls the at least one content providing device and the at least one content reproducing device, the method comprising: providing identification information of a plurality of content files which are managed by the a content providing device to the control module if a request for content is issued; selecting a content reproducing device based on at least one reproduction property of a content file which is selected from among the plurality of content files and specification information of the content reproducing device if information of the content file is which is selected received from the control module; and transmitting the content file which is selected to the content reproducing device which is selected.

In a fourth aspect of the present invention, there is provided a method of automatically interfacing between devices that reproduce content in a network which includes at least one content providing device, at least one content reproducing device, and a control module that manages and controls the at least one content providing device and the at least one center reproducing device, the method comprising: generating a content list if identification information of at least one content file is received from the content providing device; providing information of a content file which is selected based on the content list to the content providing device that manages the content file which is selected; selecting a content reproducing device based on at least one reproduction property of the content file which is selected and specification information of the content reproducing device if the at least one reproduction property of the content file which is selected is received from the content providing device that manages the content file which is selected; and transmitting a command to reproduce the content file which is selected to the content reproducing device which is selected and issuing a request to transmit of the content file which is selected to the content providing device that manages the content file which is selected.

In a fifth aspect of the present invention, there is provided a method of automatically interfacing between devices that reproduce content in a network which includes at least one content providing device and at least one content reproducing device, the method comprising: automatically setting operating conditions for reproducing a content file which is provided by a content providing device based on at least one reproduction property which is included in the content file; and reproducing the content file which is received by the content reproducing device based on the operating conditions which are set.

In a sixth aspect of the present invention, there is provided an apparatus for automatically interfacing between devices that reproduce conten, the apparatus comprising: a content provider group which comprises at least one content providing device that manages at least one content file and provides the at least one content file in response to a content file request, wherein each of the at least one content files comprises content data and at least one reproduction property which corresponds to the content data; content reproducing group which comprises at least one content reproducing device that reproduces a content file which is provided by a content providing device; and a control module which selects the content file which is provided by the content providing device, selects the content reproducing device based on the at least one reproduction property of the content file which is selected and specification information of the content reproducing device, and controls and manages the content providing device and the content reproducing device such that the content file which is selected is transmitted to the content reproducing device which is selected.

In a seventh aspect of the present invention, there is provided an apparatus for automatically interfacing between devices that reproduce content, the apparatus comprising: a content reproducer group which comprises at least one content reproducing device that reproduces content files; a content provider group which comprises at least one content providing device that manages at least one content file, selects a content reproducing device based on at least one reproduction property which is included in the content file which is selected and specification information of the content reproducing device, and transmits the content file which is selected to the content reproducing device, wherein each of the content files comprises content data and at least one reproduction property corresponding to the content data; and a control module, which selects the content file and transmits information of the content file which is selected to the content providing device that manages the selected content file which is selected.

In other aspects of the present invention, there is provided a computer-readable recording medium storing a computer program for executing the method of automatically interfacing between devices that reproduce content in a network which includes at least one content providing device, at least one content reproducing device, and a control module that manages and controls the at least one content providing device and the at least one content reproducing device.

According to the present invention there is provided an apparatus, a method and a computer-readable recording medium as set forth in the appended claims, Preferred features of the invention will be apparent from the dependent claims, and the description which follows.

For a better understanding of the invention, and to show laow embodiments of the same may be carried into effect, reference will now be made, by way of example, to the accompanying diagrammatic drawings in which:
FIG. 1 is a block diagram illustrating a network to which a method and/or an apparatus for automatically interfacing between devices used to reproduce content according to an exemplary embodiment of the present invention is applied;
FIG. 2 is a block diagram illustrating a control point of FIG. 1;
FIG. 3 is a diagram illustrating the structure of a content directory;
FIG. 4 is a diagram illustrating the structure of a content file frame;
FIG. 5 is a block diagram of a rendering controller included in a media renderer;
FIG. 6 is a block diagram illustrating a network to which a method and/or an apparatus for automatically interfacing between devices used to reproduce content according to another exemplary embodiment of the present invention is applied;
FIG. 7 is a block diagram illustrating a control point of FIG. 6;
FIG. 8 is a flowchart illustrating a method of automatically interfacing between devices used to reproduce content according to an exemplary embodiment of the present invention; and
FIG. 9 is a flowchart illustrating a method of automatically interfacing between devices used to reproduce content according to another exemplary embodiment of the present invention.

The present invention will now be described more fully with reference to the accompanying drawings.

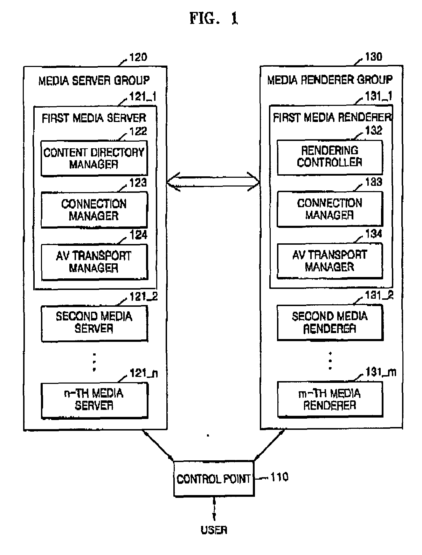

FIG. 1 is a block diagram illustrating a network to which an apparatus for automatically interfacing between devices which are used to reproduce content according to an exemplary embodiment of the present invention is applied. Referring to FIG. 1, the network is an UPnP-based network, which includes a control point 110, a media server group 120 comprised of first through n-th media servers 121_1 through 121_n, and a media renderer group 130 comprised of first through m-th media renderers 131_1 through 131_m.

The control point 110 is a device that serves as a remote controller or a user interface (UI). The control point 110 is also a control module that enables a user to manage and control all of the devices connected to the network.

Particularly, the control point 110 can manage and control all of the devices connected to the network so that the first through n-th media servers 121_1 through 121_n, which can provide content, and the first through m-th media renderers 131_1 through 131_m, which can reproduce content, can automatically interface with each other.

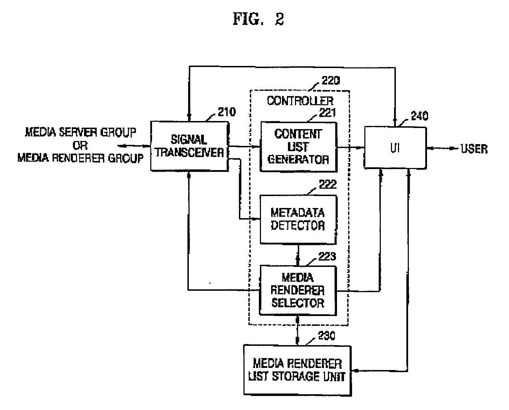

Referring to FIG. 2, the control point 110 includes a signal transceiver 210, a controller 220, a media renderer list storage 230, and a UI 240.

The signal transceiver 210 transmits signals to and receives signals from the devices connected to the network of FIG. 1, i.e., the first through n-th media servers 121_1 through 121_n included in the media server group 120 or the first through m-th media renderers 131_1 through 131_n included in the media renderer group 130, using an Internet standard, such as TCP/IP, HTTP, or XML.

The controller 220 includes a content list generator 221, a metada detector 222, and a media renderer selector 223. The controller 220 controls the control point 110 to generate a content list and to select one of the device connected to the network of FIG. 1 as an optimum media renderer, The controller 220 may be included in a unit (not shown) for controlling the entire operation of the control point 110.

The content list generator 221 generates a list of reproducible content items based on content directory information received from the signal transceiver 210. The content directory information may be provided by cach of the first through n-th media servers 121_1 through 121_n having content files. The content directory information contains content file identification information. For example, the content directory information may contain the name of a content file as the content file identification information.

When a user selects a content file that he or she desires to reproduce from the content list which is generated by the content list generator 221, the signal transceiver 210 receives data containing metadata corresponding to the selected content file. Then, the m.etadata detector 222 detects the metadata from the data received by the signal transceiver 210. In other words, the metadata detector 222 detects the metadata from a metadata field of the received data. The metadata may be reproduction property information that includes operating condition information of a media renderer that is capable of reproducing the selected content file.

The operating condition information may include content type information, sound mode information, file format information, picture quality information, screen ratio information, input mode information, and volume level information. The content type information may specify whether the selected content file is a video file, an audio file, a music file, or a photo file.

If the selected content file is, for example, a video file, the content type information may further specify whether the selected content is a musical DVD file, a sports video file, or a movie file. The sound mode information may specify whether the sound of the selected content file is to be reproduced in a hall mode, a concert mode, a stereo mode, or a mono mode. The screen ratio information may specify whether video data of the selected content file is to be reproduced with a screen ratio of 4:3 or 16:9.

If the selected content file is a. video file, the picture quality information may specify whether the selected content file is of a standard definition (SD) level or a high definition (HD) level.

The input mode information may specify whether the selected content file has been input in an external input mode or a broadcast reception mode. The volume level information may specify a volume level in which the audio data of the selected content file is to be reproduced. The metadata containing the operating condition information may be generated using XML.

The media renderer selector 223 analyzes the metadata which is detected by the metadata detector 222 by, for example, sequentially reading the detected metadata. As a result of the analysis, the media renderer selector 223 can obtain reproduction property information of the selected content file that specifies the reproduction properties of the selected content file.

Thereafter the media renderer selector 223 chooses a media renderer that has specification information which i.s capable of satisfying the reproduction properties of the selected content file as an optimum media renderer for the selected content file based on data stored in the media renderer list storage unit 230, and particularly, the names and specification information of the first through m-th media renderers 131_1 through 131_m that are stored in the media renderer list storage unit 230.

For example, if the reproduction property information of the selected content file specifies that the selected content file is HD content and the content is to be reproduced in a 5.1 channel sound mode with a screen ratio of 16:9, the media renderer selector 223 selects one of the first through m-th media renderers 131_1 through 131_m that has specification information that is capable of satisfying all of the reproduction properties of the selected content file as an optimum media renderer for the selected content file.

Further, if none of the first through m-th media 131_1 through 131_m satisfy all of the reproduction properties of the selected content file, the media renderer selector 223 may notify the UI 240 that there is no optimum media renderer for the selected content file among the first through m-th media 131_1 through 131_m.

However, before notifying the UI 240 that there is no optimum media renderer for the selected content file among the first through m-th media 131_1 through 131_in to satisfy all of the reproduction properties of the selected content file, the media renderer selector 223 may determine whether there is a second best media renderer for the selected content file tha.t satisfies not all but most of the reproduction properties of the selected content file among the first through m-th media 131_1 through 131_m with reference to the data stored in the media renderer list storage unit 230. For example, the media renderer selector 223 may determine one of the first through m-th media renderers 131_1 through 131_m that satisfies the type of the selected content file as a second best media renderer for the selected content file.

Also, if more than one of the media renderers is qualified to be a second best media renderer for the selected content file among the first through m-th media renderers 131_1 through 131_m, the media renderer selector 223 may select one of the qualified media renderers that satisfies more of reproduction properties of the selected content file than the other qualified media renderers as a second best media renderer for the selected content file or may select one of the qualified media renderers that satisfies more prioritized reproduction properties of the selected content file than the other qualified media renderers as the second best media renderer for the selected content file. The media renderer that is chosen as the second best media renderer is treated as an optimum media renderer.

For example, if the selected content file is a video file of an HD level, an optimum media renderer for the selected content file would be an HDTV However, if the media renderer group 130 of FIG. 1 does not include ar HDTV but includes a CRT TV and a monitor, the media renderer selector 223 selects one of the CRT TV and the monitor as a second best media rendere for the selected content file.

Suppose the media renderer selector 223 is designed to select one of first through m-th media renderers 131_1 through 131_m as a second best media renderer for the selected content file if there is no optimum media tenderer for the selected content file among the first through m-th media renderers 131_1 through 131_m, as described above. If none of the first through m-th media renderers 131_1 through 131_m are determined as being qualified as a second best media renderer for the selected content file based on the data stored in the media renderer list storage unit 230, the media renderer selector 223 notifies the UI 240 that there is no optimum or second best media renderer for the selected content file among the first through m-th media 131_1 through 131_m. For example, if the selected content file is a video file and none of the first through m-th media renderers 131_1 through 131_m are display devices, the media renderer selector 223 notifies the UI 240 that there is no optimum or second best media renderer for the selected content file among the first through m-th media renderers 131_1 through 131_m.

Once one of the first through m-th media renderers 131_1 through 131_m is selected as an optimum media renderer for the selected content file, the media renderer selector 223 transmits a request signal for requesting the transmission of the selected content file to the media renderer which is chosen as the optimum media renderer for the selected content file to the signal transceiver 210 and also transmits a play command for the selected media renderer to the signal transceiver 210. Accordingly, the signal transceiver 210 forwards the request signal to a media server that has sent the metadata corresponding to the selected content file and forwards the play command to the media renderer chosen as the optimum media renderer for the selected content file.

The media renderer list storage unit 230 stores the names and specification information of the first through m-th media renderers 131_1 through 131_m which are included in the media renderer group 130 of FIG. 1.

The UI 240 transmits a request message requesting the search of a content directory to the signal transceiver 210 when the user issues a request for the search of reproducible content items. Accordingly, the signal transceiver 210 forwards the request message to the media server group 120 comprised of the first through n-th media servers 121_1 through 121_n. If the signal transceiver 210 receives a response message from the media server group 120, it forwards the response message to the controller 220.

When the UI 240 receives a content list from the content list generator 221, it provides the content list that is received to the user. When the user selects one of a plurality of content files included in the received content list, the UI 240 provides information on the selected content file to one of the first through n-th media servers 121_1 through 121_n that can provide the selected content file via the signal transceiver 210.

In addition, if the UI 240 receives a signal that indicates there is no optimum media renderer for the selected content file among the first through m-th media renderers 131_1 through 131_m from the media renderer selector 223, UI 240 notifies the user that none of the first through m-th media renderers 131_1 through 131_m are qualified optimum media renderers for the selected content file by the media renderer selector 223 and then asks the user whether he or she still desires to reproduce the selected content file using a second best media renderer for the selected content file among the first through m-th media renderers 131_1 through 131_m. If the user does not want the second best media renderer for the selected content file to reproduce the selected content file, the UI 240 outputs a message indicating that the selected content file cannot be reproduced.

However, if the user desires to reproduce the selected content file using the second best media renderer for the selected content file, the UI 240 reads a media renderer list stored in the media renderer list storage unit 230 and outputs the media renderer list. When the user selects one of a plurality of media renderers included in the media renderer list, i.e., the first through m-th media renderers 131_1 through 131_m, the UI 240 transmits a request signal for requesting the transmission of the selected content file to the selected media renderer to the signal transceiver 210 and also transmits a play command for the selected media renderer to the signal transceiver 210.

The media server group 120 of FIG. 1 includes the first through n-th media servers 121_1 through 121_n. Each of the first through n-th media servers 121_1 through 121_n may be a device having a computer or a storage device of its own and may be referred to as a content provider.

Specifically, referring to FIG. 1, each of the first through n-th media servers 121_1 through 121_n includes a content directory manager 122, a connection manager 123, and an audio/visual (AV) transport manager 124.

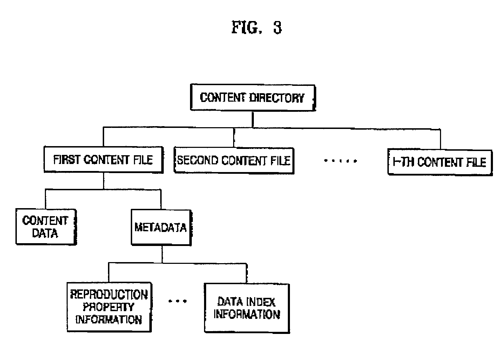

The content directory manager 122 manages a content directory comprised of content files that can be provided by a corresponding media server, for example, the first media server 121_1, and metadata files corresponding to the content files. Specifically, referring to FIG. 3, the content directory is comprised of first through i-th content files, and each of the first through i-th content files consists of a content data file and a metadata file (or a metadata description file). The metadata file may include reproduction property information and data index information of a corresponding content file.

The reproduction property information (i.e., reproduction condition information) of the corresponding content file includes content type information that specifies whether content data of the corresponding content file is video data. If the content data of the corresponding content file is video data, the reproduction property information of the corresponding content file may also include picture quality information, screen ratio information, and sound mode information. The data index information may include information on the title, size, and location of the content data of the corresponding content file.

The content directory may be comprised of only one content file.

When a request signal for requesting the search of reproducible contents is transmitted from the control point 110, the content directory manager 122 transmits the content directory information, including the names of all of the content files included in the content directory, to the control point 110.

When information on the selected content file is received from the control point 110, the content directory manager 122 transmits a metadata file of the selected content file to the control point 110.

When a request for the transmission of the selected content file to a particular media renderer is issued by the control point 110, the content directory manager 122 transmits a content data file and the metadata file of the selected content file to the AV transport manager 124.

When the first media server 121_1 is connected to the network of FIG. 1, the connection manager 123 controls a connection among the first media server 121_1 and all of the devices currently connected to the network of FIG. 1 so to the devices recognize each other using the Internet or a web protocol.

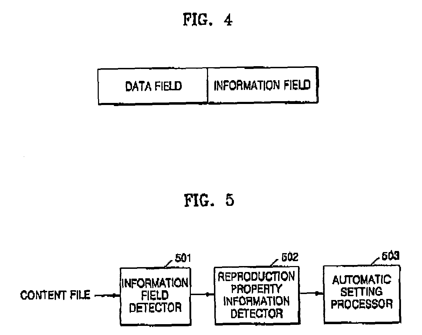

The content data file and the metadata file received from the content directory manager 122 by the AV transport manager 1.24 may be defined as a data structure illustrated in FIG, 4. Referring to FIG. 4, the content data file of the selected content file is inserted in a data field, and the metadata file of the selected content file is inserted in an information field.

The AV transport manager 124 transmits the selected content file having the data structure illustrated in FIG. 4 to the media renderer chosen, as an optimum media Tenderer for the selected content file with reference to information on the corresponding media renderer provided from the control point 110. If the optimum media renderer is the first media renderer 131_1, the AV transport manager 124 transmits the selected content file to the first media renderer 131_1. The first media server 121_1 and the first media renderer 1.31_1 transmit the selected content file to or receive the selected content file from each other in an isochronous or asynchronous push or pull manner based on an out-of-band streaming protocol.

The media, server group 120 may be comprised of only one media server.

Referring to FIG. 1, the media renderer group 130 includes the first through muth media renderers 131_1 through 131_m. Each of the first through m-th media renderers 131_1 through 131_m may be a device capable of reproducing a content file, such as a laptop computer, an audio player, or a TV.

Each of the first through m-th media renderers 131_1 through 131_m includes a rendering controller 132, a connection manager 133, and an AV transport manager 134.

When a command to reproduce a particular content file having the data structure illustrated in FIG. 4 is received from the control point 110 and the particular content file is received from one of the first through n-th media servers 121_1 through 121_n included in the media server group 120, for example, the first media server 121_1, the rendering controller 132 automatically sets operating conditions for a corresponding media renderer (e.g., first media renderer 131_1) based on metadata contained in an information field of the received content file.

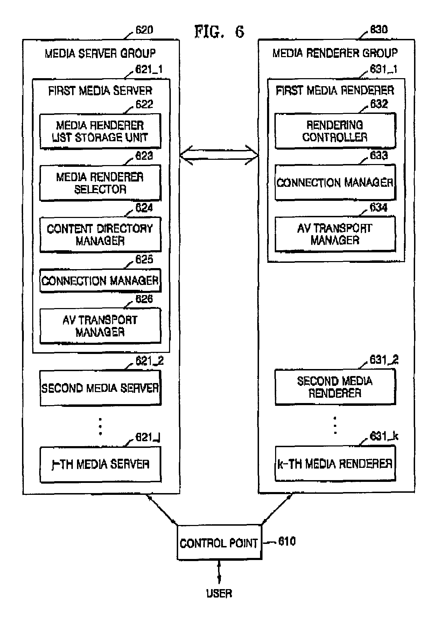

Referring to FIG. 5, the rendering controller 132 includes an information field detector 501, a reproduction property information detector 502, and an automatic setting processor 503.

The information field detector 501 detects data from the information field of the received content file with reference to previously set field information or field identification information. The information field detector 501 transmits the detected data to the reproduction property information detector 502.

The reproduction property information detector 502 sequentially reads the detected data and detects operating condition information needed for setting a reproduction environment for the first media renderer 131_1 from the detected data as reproduction property information. The reproduction property information detector 502 transmits the reproduction property information to the automatic setting processor 503.

The automatic setting processor 503 automatically sets operating conditions for the first media renderer 131_1 based on the received reproduction property information. For example, if the received content file is a DVD-level video file, the automatic setting processor 503 sets an input mode of the first media renderer 131_1 to an external input mode, turns on an AV receiver of the first media renderer 131_1, and sets the first media renderer 131_1 to a screen ratio of 16:9 based on the received reproduction property information.

The connection manager 133 performs a connection operation to automatically connect the first media renderer 131_1 to other devices in the network of FIG. 1 as the connection manager 123 of the first media server 121_1. The AV transport manager 134 receives a content file having the data structure illustrated in FIG. 4 which is streamed by the corresponding media server of the first media server group 120 and AV transport manager the transmits the received content file to the rendering controller 132 of the first media renderer 131_1.

FIG. 6 is a block diagram illustrating a network to which an apparatus is applied for automatically interfacing between devices used to reproduce content according to another exemplary embodiment of the present invention. Referring to FIG. 6, the network is an UPnP-based network, which includes a control point 610, a media server group 620 comprised of first through j-th media servers 621_1 through 621_j, and a media renderer group 630 comprised of first through k-th media renderers 631_1 through 631_k.

In the network of FIG. 6, unlike in the network of FIG. 1, each of the first through j-th media servers 621_1 through 621_j selects one of the first through k-th media renderers 631_1 through 631_k as an optimum media renderer for a content file that it provides. Accordingly, if the control point 610 selects one of a plurality of content files provided by the first through j-th media servers 621_1 through 621_j as a content file to be reproduced, one of the first through j-th media servers 621_1 through 621_j that possesses the selected content file selects one of the first through k-th media renderers 631_1 through 631_k as an optimum media renderer for the selected content file with reference to metadata of the selected content file and transmits the selected content file including the metadata and a command to reproduce the selected content file to the selected media renderer.

Then, operating conditions of the selected media renderer are set based on reproduction property information contained in the metadata of the received content file and the selected media renderer reproduces the received content file according to the operating conditions which are set,

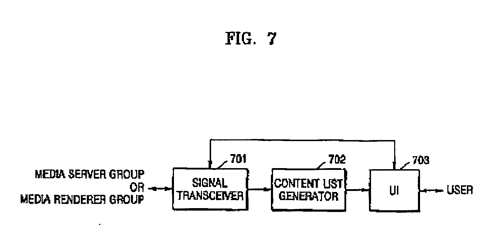

FIG. 7 is a detailed block diagram illustrating the structure of the control point 610 of FIG. 6. Referring to FIG. 7, the control point 610 includes a signal transceiver 701, a content list generator 702, and a UI 703, which serve the same functions as their respective counterparts of FIG. 2 (i.e., the signal transceiver 210, the content list generator 221, and the UI 240). The control point 610, similar to the control point 110 of FIG. 1, allows a user to select one of the content files provided by the first through j-th media servers 621_1 through 621_i of FIG. 6 and provides information on the selected content file to one of the first through j_th media servers 621_1 through 621_j that possesses the selected content file. The content list generator 702 may be included in a unit for controlling all of the functions of the control point 610.

Referring to FIG. 6, each of the first through j-th media servers 621_1 through 621_j included in the media server group 620 includes a media renderer list storage unit 622, a media renderer selector 623, a content directory manager 624, a connection manager 625, and an AV transport manager 626.

The connection manager 625 and the AV transport manager 626 have the same structures and operations as the connection manager 123 and the AV transport manager 124 of FIG. 1.

The content directory manager 624 manages a content directory that has the structure illustrated in FIG. 3. When information on the selected content file is received from the control point 610, the content directory manager 624 issues a request for the selection of one of the first through k-th media renderers 631_1 through 631_k as an optimum media renderer for the selected content file to the media renderer selector 623.

The media renderer selector 623 selects one of the first through k-th media renderers 631_1 through 631_k as an optimum media renderer for the selected content file with reference to a metadata file corresponding to the selected content file managed by the content directory manager 624 and the names and specification information of the first through k-th media renderers 631_1 through 631_k stored in the media renderer list storage unit 622 according to predetermined standards that have been described above with reference to FIG. 2. Thereafter, the media renderer selector 623 notifies the content directory manager 624 and the AV transport manager 626 that one of the first through k-th media renderers 631_1 through 631_k has been chosen as the optimum media renderer for the selected content file.

Accordingly, the content directory manager 624 and the AV transport manager 626, which serve the same functions as the content directory 122 and the AV transport manager 124, respectively, of FIG. 1, transmit the selected content file to the media renderer that is chosen as the optimum media renderer for the selected content file.

The media renderer group 630 includes the first through k-th media renderers 631_1 through 631_k. Each of the first through k-th media renderers 631_1 through 631_k includes a rendering controller 632, a connection manager 633, and an AV transport manager 634, which have the same structures and operations as the rendering controller 132, the connection manager 133, and the AV transport manager 134, respectively, of FIG. 1.

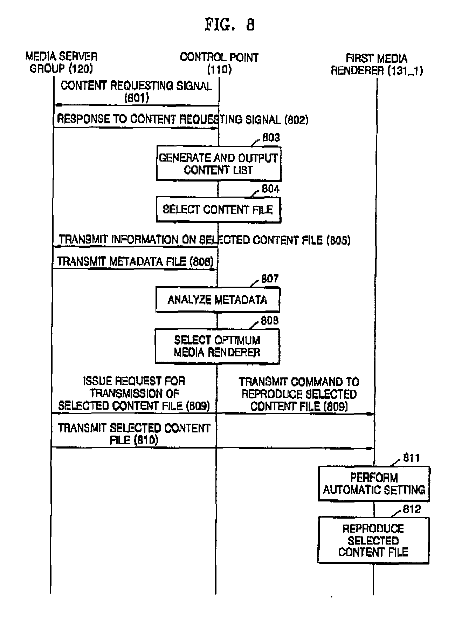

FIG. 8 is a flowchart illustrating a method of automatically interfacing between devices used to reproduce content according to another exemplary embodiment of the present invention. Referring to FIGS. 1 and 8, in operation 801, the control point 110 transmits a content directory requesting signal or content requesting signal to the media server group 120. In operation 802, each of the first through n-th media servers 121_1 through 121_n included in the media server group 120 collects the names of content files which are included in its content directory and transmits the collected content file names to the control point 110 in response to the content directory requesting signal or content requesting signal.

In operation 803, the control point 110 generates a content list based on the received content file names and outputs the content list.

In operation 804, a user selects one of the content files provided by each of the first through n-th media servers 121_1 through 121_n as a content file to be reproduced with reference to the content list. In operation 805, the control point 110 transmits information on the selected content file to one of the first through n-th media servers 121_1 through 121_n that possesses the selected content file. Suppose that the first media server 121_1 possesses the selected content file, In operation 806, the first media server 121_1 provides a metadata file of the selected content file to the control point 110.

In operation. 807, the control point 110 analyzes the received metadata file and obtains reproduction property information of the selected content file as the analysis results. The reproduction property information is the same as operating condition information described in the metadata detector 222 of FIG. 2. In operation 808, the control point 110 selects one of the first through m-th media renderers 131_1 through 131_m as an optimum media renderer for the selected content file with reference to the analysts results and previously stored information on each of the first through m-th media renderers 131_1 through 131_m. The previously stored information on each of the first through m-th media renderers 131_1 through 131_m is the same information stored in the media renderer list storage unit 230 of FIG. 2.

Additionally, in operation 808, one of the first through m-th media renderers 131_1 through 131_m that satisfies all of the reproduction properties of the selected content file may be chosen as an optimum media tenderer for the selected content file. However, if none of the first through m-th media renderers 131_1 through 131_m satisfy all of the reproduction properties of the selected content file, the control point 110 notifies the user that none of the first through m-th media renderers 131_1 through 131_m are qualified optimum media renderers for the selected content file. If the user does not desire another media renderer for the selected content file among the first through m-th media renderers 131_1 through 131_m to reproduce the selected content file, the control point 110 transmits a message to the user indicating that the selected content file cannot be reproduced.

However, if the user desires another media renderer for the selected content file to reproduce the selected content file, the control point 110 provides information regarding one or more of the first through m-th media renderers 131_1 through 131_m that can be chosen as the second best media renderer for the selected content file to the user with reference to the previously stored information on each of the first through m-th media renderers 131_1 through 131_m. Accordingly, the user can choose one of the first through m-th media renderers 131_1 through 131_m as the second best media renderer for the selected content file with reference to the information provided by the control point 110.

If none of the first through m-th media renderers 131_1 through 131_m are qualified for an optimum media renderer for the selected content file, the control point 110 may choose one of the first through m-th media renderers 131_1 through 131_m as a second best media renderer for the selected content file without displaying a message which asks the user whether he or she wants to reproduce the selected content file with the second best media renderer for the selected content file.

Suppose that the first media renderer 131_1 is chosen as the optimum media renderer for the selected content file in operation 808. In operation 809, the control point 110 transmits a command to transmit the selected content file to the first media renderer 131_1 to the first media server 121_1 and transmits a command to reproduce the selected content file to the first media renderer 131_1.

In operation 810, the first media server 121_1 streams the selected content file to the first media renderer 131_1. The selected content file has the data structure illustrated in FIG. 4.

In operation 811, the first media Tenderer 131_1 automatically sets its operating conditions appropriately for reproducing the selected content file based on reproduction property information obtained by analyzing a metadata file inserted in an information field of the selected content file. In operation 812, the first media renderer 131_1 reproduces the selected content file under the operating conditions which are set

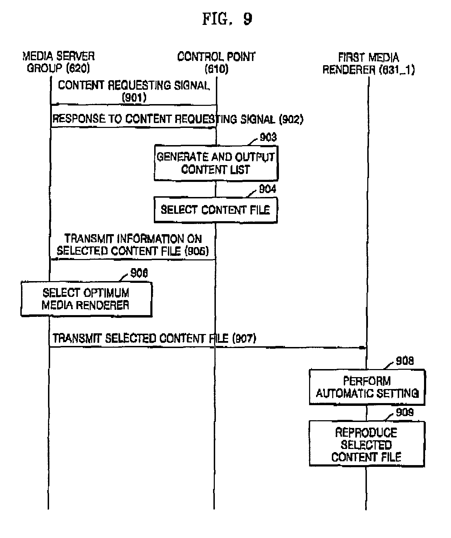

FIG. 9 is a flowchart illustrating a method of automatically interfacing between content reproduction devices according to another exemplary embodiment of the present invention. Referring to FIGS. 6 and 9, in operation 901, the control point 610 transmits a content requesting signal to the media server group 620. In operation 902, each of the first through j-th media servers 621_1 through 621_j included in the media server group 620 collects the names of content files included in its content directory and transmits the collected content file names to the control point 610 as a response to the content requesting signal.

In operation 903, the control point 610 generates a content list based on the received content file names and outputs the content list.

In operation 904, a user selects one of the content files provided by each of the first through j-th media servers 621_1 through 621_j with reference to the content list. In operation 905, the control point 610 transmits information on the selected content file to one of the first through j-th media servers 621_1 through 621_j that possesses the selected content file.

Suppose that the first media server 621_1 possesses the selected content file. In operation 906, the first media server 621_1 chooses one of the first through k-th media renderers 631_1 through 631_k as an optimum media renderer for the selected content file with reference to a metadata file of the selected content file and previously stored information on each of the first through k-th media renderers 631_1 through 631_k, The previously stored information on each of the first through k-th media renderers 631_1 through 631_k may be stored in the media renderer list storage unit 230 of FIG. 2.

Suppose that the first media renderer 631_1 is chosen as the optimum media renderer for the selected content file in operation 906. In operation 907, the first media server 621_1 transmits the selected content file to the first media renderer 631_1. The selected content file has the data structure illustrated in FIG. 4.

In operation 908, the first media renderer 631_1 automatically sets its operating conditions appropriately for reproducing the selected content file based on reproduction property information obtained by analyzing a metadata file inserted in an information field of the selected content file. In operation 909, the first media renderer 631_1 reproduces the selected content file under the set operating conditions.

The exemplary embodiments of the present invention have been described above as being applicable to an UPnP-based network environment However, the present invention is also applicable to a network comprised of a content provider instead of media servers, a content reproduction instead of media renderers, and a control module instead of a control point.

The method of automatically interfacing between devices used to reproduce content according to exemplary embodiments of the present invention can be realized as computer-readable codes written on a computer-readable recording medium. The computer-readable recording m.edium may be any type of storage device on which data can be recorded in a computer-readable manner. Examples of the computer-readable recording medium include a ROM, a RAM, a CD-ROM, a magnetic tape, a floppy disc, an optical data storage, and a carrier wave (e.g., data transmission through the Internet). The computer-rcada.ble recording medium can be distributed over a plurality of computer systems connected to a network so that data can be recorded thereon in a decentralized manner.

As described above, according to aspects of the present invention, a user does not need to know about reproduction properties of a content file that he or she wants to reproduce because the content file is automatically transmitted to an optimum content reproduction device or an optimum media renderer.

In addition, it is possible to minimize the number of processes that the user needs to carry out to reproduce the content file by automatically setting operating conditions for the optimum content reproduction device or the optimum media renderer.

Although a few preferred embodiments have been shown and described, it will be appreciated by those skilled in the art that various changes and modifications might be made without departing from the scope of the invention, as defined in the append.ed claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the dctails of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of automatically interfacing between devices that reproduce content in a network which includes at least one content providing device (121) and at least one content reproducing device, the method comprising:
selecting a content reproducing device (131) based on metadata of acontent file which is selected and specification information of the content reproducing device (131);
transmitting the content file from a content providing device (131) that provides the content file which is selected to the content reproducing device (131) which is selected; and
reproducing the content file which is selected by the content reproducing device (131) which is selected.

2. The method of claim 1, wherein the metadata comprises at least one reproduction property of the content file which is selected, and in the selecting of the content reproducing device (131), specification information of the content reproducing device (131) which is selected specifies each reproduction property of the content file which is selected.

3. The method of claim 2, wherein the selecting the content reproducing device (131) further comprises selecting a content reproducing device that includes specification information which specifies at least one of the reproduction property of the selected content file if no content reproducing device (131) includes specification information which specifies each reproduction property of the content file which is selected.

4. The method of claim 2 or of claim 3, wherein the selecting of one of the content reproducing devices (131) further comprises selecting the content reproducing device (131) based on a predetermined priority of the at least one reproduction property of the content file which is selected.

5. The method of any one of claims 1, 2, 3, or 4, wherein reproducing the content file which is selected further comprises automatically setting operating conditions of the content reproducing device (131) which is selected based on the at least one reproduction property of the content file.

6. The method of any preceding claim, wherein the network is a peer-to-peer network.

7. A method of automatically interfacing between devices that reproduce content in a network which includes at least one content providing device (121), at least one content reproducing device (131), and a control module (110) that manages and controls the at least one content providing device (121) and the at least one content reproducing device (131), the method comprising:
providing identification information of a plurality of content files which are managed by a content providing device (1.21) to the control module (110) if a request for content is issued;
providing at least one reproduction property of a content file which is selected from among the plurality of content files to the control module (110) if identification information of the content file which is selected is received from the control module (110); and
transmitting the content file which is selected to a content reproducing device (131) which is selected from a plurality of content reproducing devices (131) if identification information of the content reproducing device (131) which selected is received from the control module (110).

8. The method of claim 7, wherein the at least one reproduction property comprises operating condition information of the content reproducing device (131) which reproduces the content file which is selected.

9. The method of claim 7 or 8, wherein the content file which is selected comprises content data and the at least one reproduction property which are transmitted to the content reproducing device (131) which is selected.

10. A method of automatically interfacing between devices that reproduce content in a network which includes at least one content providing device (121), at least one content reproducing device (131), and a control module (110) that manages and controls the at least one content providing device (121) and the at least one content reproducing device (121), the method comprising:
providing identification information of a plurality of content files which are managed by a content providing device (121) to the control module (110) if a request for content is issued;
selecting a content reproducing device (131) based on at least one reproduction property of a content file which is selected from the plurality of content files and specification information of the content reproducing device (131) if identification information of the content file which is selected is received from the control module (110); and
transmitting the content file which is selected to the content reproducing device (131) which is selected.

11. The method of claim 10, wherein the at least one reproduction property of the content file which is selected comprises operating condition information of the content reproducing device (131) which is selected that reproduces the content file, and the content file which is selected is transmitted to the content reproducing device (131) which is selected comprises content data and the at least one reproduction property.

12. A method of automatically interfacing between devices that reproduce content in a network which includes at least one content providing device (121), at least one content reproducing device (131), and a control module (110) that manages and controls the at least one content providing device (121) and the at least one content reproducing device (131), the method comprising:
generating a content list if identification information of at least one content file is received from a content providing device (121);
providing information of a content file which is selected based on the content list to a content providing device (121) that manages the content file which is selected;
selecting a. content reproducing device (131) based on at least one reproduction property of the content file which is selected and specification information of the content reproducing device (131) if the at least one reproduction property of the content file which is selected is received from the content providing device (121) that manages the content file which is selected; and
transmitting a command to reproduce the content file which is selected to the content reproducing device (131) which is selected and issuing a request to transmit the content file which is selected to the content providing device (121) that manages the content file which is selected.

13. The method of claim 12, wherein the at least one reproduction property of the content file which is selected comprises operating condition information of the content reproducing device (131) which is selected that reproduces the content file which is selected.

14. A method of automatically interfacing between devices that reproduce content in a network which includes at least one content providing device (621) and at least one content reproducing device (631), the method comprising:
automatically setting operating conditions for reproducing a content file which is provided by a content providing device (621) based on at least one reproduction property which is included in the content file; and
reproducing the content file which is received by the content reproducing (631) device based on the operating conditions which are set.

15. An apparatus for automatically interfacing between devices that reproduce content, the apparatus comprising:
a content provider group (120) which comprises at least one content providing device (121) that manages at least on.e content file and provide the at least one content file in response to a content file request, wherein each of the at least one content files comprises content data and at least one reproduction property which corresponds to the content data;
a content reproducing group (130) which comprises at least one content reproducing device (131) that reproduces a content file which is provided by a content providing device (121); and
a control module (110) which selects the content file which is provided by the content providing device (121), selects the content reproducing device (131) based on the at least one reproduction property of the content file which is selected and specification information of the content reproducing device (131), and controls and manages the content providing device (121) and the the content reproducing device (131) such that the content file which is selected is transmitted to the content reproducing device (131) which is selected.

16. The apparatus of claim 15, wherein the content reproducing device (131) which is selected automatically sets operating conditions of reproducing the content .file which is selected based on the at least one reproduction property of the content file which is selected.

17. An apparatus for automatically interfacing between devices that reproduce content, the apparatus comprising:
a content reproducer (630) group which comprises at least one content reproducing device (631) that reproduces content files;
a content provider group (620) which comprises at least one content providing device (621) that manages at least one content file, selects a content reproducing device based (631) on at least one reproduction property which is included in the content file which is selected and specification information of the content reproducing device (631), and transmits the content file which is selected to the content reproducing device (631), wherein each of the content files comprise content data and at least one reproduction property which corresponds to the content data; and
a control module (610) which selects the content file and transmits information of the content file which is selected to the content providing device (621) that manages the content file which is selected.

18. The apparatus of claim 17, wherein the content reproducing device (631) which is selected automatically sets operating conditions of reproducing the content file which is selected based on the at least one reproduction property of the content file which is selected.

19. A computer-readable recording medium storing a computer program for executing a method of automatically interfacing between devices that reproduce content in a network which includes at least one content providing device (121), at least one content reproducing device (131), and a control module (110) that manages and controls the at least one content providing (121) device and the at least one content reproducing device (131), the method comprising:
providing identification information of a plurality of content files which are managed by a content providing device (121) to the control module (110) if a content request is issued;
providing at least one reproduction property of a content file which is selected from among the plurality of content files to the control module (110) if information of the content file which is selected is received from the control module (110); and
transmitting the content file which is selected to a content reproducing device (131) which is selected if information of the content reproducing device (131) is received from the control module.

20. A computer-readable recording medium storing a computer program, for executing a method of automatically interfacing between devices that reproduce content in, a n.etwork which includes at least one content providing device, at least one content reproducing device, and a control module that manages and controls the at least one content providing device and the at least one content reproducing device, the method comprising;
providing identification information of a plurality of content files which are managed by a content providing device (121) to the control module (110) if a request for content is issued;
selecting a content reproducing device (131) based on at least one reproduction property of a content file which is selected from among the plurality of content files and specification information of the content reproducing device (131) if information on the content file which is selected is received from the control module (110); and
transmitting the content file which is selected to the content reproducing device (131) which is selected.

21. A computer-readable recording medium storing a computer program for executing a method of automatically interfacing between devices that reproduce content in a network which includes at least one content providing device (121), at least one content reproducing device (131), a control module (110) that manages and controls the at least one content providing device (121) and the at least one content reproducing device (131), the method comprising:
generating a content list if identification information of at least one content file is received from a content providing device (121);
providing information on a content file which is selected based on the content list to the content providing device (121) that manages the content file which is selected;
selecting a content reproducing device (131) based on at least one reproduction property of the content file which is selected and specification information of the content reproducing device (131) if the at least one reproduction property of the content file which is selected is received from the content providing device that manages the content file which is selected; and
transmitting a command to reproduce the content file which is selected to the content reproducing device (131) which is selected and issuing a request to transmit the content file which is selected to the content providing device (121) that manages the content file which is selected.

22. A computer-readable recording medium storing a computer program for executing a method of automatically interfacing between devices that reproduce content in a network which includes at least one content providing device (621) and at least one content reproducing device (631), the method comprising:
automatically setting operating conditions of a content reproducing device (631) that reproduces a content file which is provided by a content providing device (621) based on at least one reproduction property which is included in the content file; and
reproducing the content file which is received by the content reproducing device (631).
